# EUROPEAN PATENT APPLICATION

(11) **EP 0 711 075 A1**
(43) Date of publication of application: **08.05.1996**
(21) Application number: 95202900.7
(22) Date of filing: 26.10.1995
(51) Int. Cl.: H04N 7/173, H04H 9/00

(54) **System for televoting**

(30) Priority: 07.11.1994 NL 9401849
(71) Applicant: Koninklijke PTT Nederland N.V., NL-2509 CH The Hague (NL)
(72) Inventor: Schinkel, Dolf Albert, NL-2181 LP Hillegom (NL)

(57) **Abstract**

System for televoting, in which home audiences may transmit televotes in response to a radio or television programme by means of a televote terminal to a central processing system. Driving the televote terminal by a (broadcasted) radio or television signal makes it possible to centrally program the televote terminal, e.g., from the studio. In this manner, the televote terminals may be provided with the desired transmission parameters, which would otherwise have to be set by the home users. The ease of use is also considerably improved, as more simple response codes may be used. Finally, central driving of the televote terminals results in additional, interactive user-options.

## Description

### A. BACKGROUND OF THE INVENTION

The invention relates to a system for transmitting, by a user of a radio or television receiver, through a response device to a processing system response codes in response to a radio or television programme received. Such a system is disclosed in two earlier patent applications of the applicant, namely, EP 600567 and EP 619680, whose contents, in so far as is of importance, shall be considered part of the present application.

The first application describes a response device - called televote device there - with which, in response to a radio or television programme, a response code ("televote") may be sent to a central processing system ("televote processor") through the telephone network. If numerous response codes are generated in a short period of time, e.g., during a popular TV quiz in which the home audience is consulted, this may lead to serious congestion of the telephone network. In order to avoid this, the invention provides for transmitting only a random part of the response codes, or for the random postponement of the transmission of the response codes.

The second application describes a televote system in which various programmes, possibly broadcasted on different channels and at different times, make use of one series of single response codes. This measure enhances the user-friendliness of the system.

### B. SUMMARY OF THE INVENTION

The object of the present invention is to further improve the ease of use of the system, utilising a control signal to be derived from the radio or television signal.

Radio or television programmes may request various kinds of response. A television quiz, e.g., may request the giving of the right answer to a question as rapidly as possible. The response code may consist of a single response code, e.g., in the event of a multiple-choice question, or of an alphanumeric series of characters (the response device must then comprise an alphanumeric keyboard, though). It is obvious that in this case the answer must be transmitted without much delay. A further condition is that the question must be difficult to such an extent that the answers to it do not cause network congestion.

A TV programme may also request the preference of the home audience for, e.g., one of three candidates or, in an advanced market survey, one of three products. In this case, a random sample survey may be carried out as described in the above application, and only a small, though representative, part of all responses may be transmitted, whereby a traffic explosion is avoided.

Another situation arises if it is not so much of importance that the requested responses come in rapidly, but rather that as many responses as possible are received. Such is the case, e.g., for a product presentation in which it is requested that one replies if one wants to receive either the product on offer or more detailed information. Even if the present system is used for fund raising, it is of importance that as many responses as possible be received. In order to prevent, even then, that the telephone network (or whichever network is used as a response medium) becomes congested, the response codes generated by the individual response devices are transmitted to the processing system in a delayed manner (with a random delay time). According to the invention, the control signal may comprise codes to set the response device to the desired transmission mode. This setting may specifically include the starting time of the (intended) transmission and the time after which no further response codes are accepted - the termination time. It may also include the maximum number of tries to transmit a response code and an indication of the ("synchronisation") times at which said transmission tries may be carried out. The latter two settings may cause the unrestrained undertaking of retries if the transmission of response codes fails.

The above examples demonstrate that different programmes require different transmission modes (protocols), on the one hand to satisfy the needs of the programme makers (and the home audience), and on the other to prevent that the "response network" (telephone network, cable television return channels) be undesirably loaded. Apart from the transmission mode, in one programme the telephone number (or other destination address) of the processing system which must receive and process the response codes of a programme, may also be different from the telephone number in another programme. According to the invention, the control signal may comprise codes which cause the response device to select the desired central processing device.

It is obvious that, as outlined above, there are many options in the use of a system such as the present one. In order to enhance the user-friendliness of the response device, and to guarantee options for future further improvements and user-options, according to the invention all options selected by the programme makers (together with network managers) may be included in the control signal received by the radio or television medium, whereby the response device is automatically set by the control signal, and whereby the user may confine himself to the making and activating of his choice.

Meanwhile, the system proposed by the present invention may also simplify and support the making of that choice, as indicated below.

As proposed in the second patent application referred to above, in a programme always a subset of one single series of selection codes is used. It is then announced in the programme which subset is valid, e.g., the subsets 78, 79 and 80, for the selection from three candidates, e.g., Mr Adamson, Mrs Bellamy and Miss Claussen. In order to enable the person who makes his or her choice by selecting 78, 79 or 80, to verify whether the choice made is also the desired one, it is possible to show the names associated with the selection numbers on a display, if these names are also included in the control signal. Thus, if the selection is "79", on the display "79 Bellamy; O.K.?" can be showed; if O.K., this choice may be activated (transmitted).

In itself, it is less attractive for the home audience to be obliged to make a choice from, e.g., the numbers 78, 79 and 80. Making use of a control-code signal to be transmitted by the broadcast signal in accordance with the present invention, offers an elegant alternative to this method as well. After all, it is possible to transmit these selection numbers (invisible to the user) through the control signal to the response device, and to convert them there, for the purpose of making the choice, into the series 1, 2, 3 (or A, B, C, if so desired). The user may therefore always make a choice from the series 1, 2, 3, which is experienced as being normal. The response device itself then converts the choice made, e.g., the choice "2", into "79" on the basis of the control signal received. This number is then transmitted to the processing system after activation. Meanwhile, this does not invalidate the previous option, and it continues to be possible to have after the choice (e.g., "2") the associated information ("2 Bellamy; O.K.?") shown. Said choice conversion (in this case from "79" into "2" or "B") is not only easy for the home users but also for the programme makers and programme hosts. It is even possible to include in the control signal the way in which the response codes should be converted, e.g., from "78" into "1" or from "78" into "A". Here, the advantages of the single series of response codes referred to in the previous application, remain substantially unchanged.

The control signal may also comprise a code which, depending on the value of this code, causes the response device to transmit, or not, a device or user identification code concomitantly with the response code. It is obvious that, if the programme makers wish to take only a random sample, no identification code need be transmitted. If, on the other hand, a programme shows a product which can be ordered by the transmission of a televote, said order televote must be accompanied by an identification of the customer. In this case, the said code in the control signal will have such a value that the response device either concomitantly transmits an own identification code which may be decoded in the central processing system to produce name, address and city data, or that it requests the user, e.g., by means of a display, to enter his user identification code.

### C. EXEMPLARY EMBODIMENTS

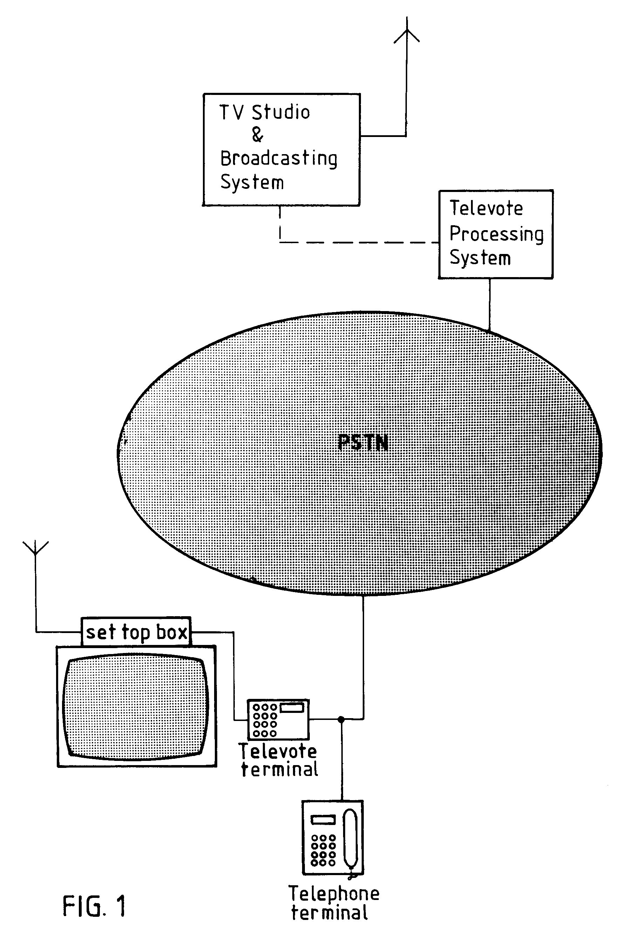

Figure 1 shows a television receiver which receives its signal through a "Set Top Box" in which the incoming television signals are decoded. The output signal intended for driving the television receiver is transmitted to the receiver. A response device, called a televote terminal, also receives an output signal from the "Set Top Box", which is intended as a control signal for the televote terminal, in order to program said televote terminal in the desired manner, inter alia with respect to the desired transmission mode. In addition, this Figure shows a TV studio and transmission system from which television programmes are broadcasted which may be received by the television receiver shown. Response codes ("televotes") may be transmitted by the television user, by means of the televote terminal, through the PSTN [Public Switched Telecoms Network], to a central processing system, where the televotes are received and are transmitted, whether in processed form or not, to the television studio. For example, a television programme asks the home audience to indicate its preference for one of the candidates Adamson, Bellamy or Claussen by transmitting televote 78, 79 or 80. The control signal received from the control connection of the television receiver sets the televote terminal in such a manner that the televote signal is transmitted in the correct manner (mode) to the correct telephone number (there may be several televote processing systems, at home and abroad). In addition, the control signal may, as already indicated, comprise information which makes it easy for the user to make his choice (and to check it). For further clarification, reference is made to the said patent applications of the applicant.

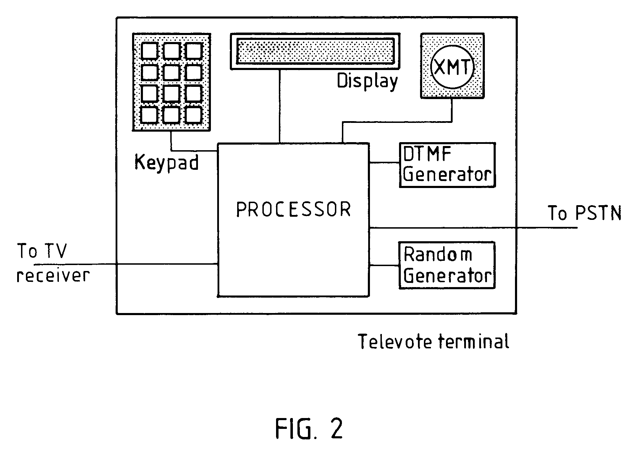

Figure 2 shows an exemplary embodiment of the televote terminal of Figure 1. This televote terminal largely corresponds to those shown and discussed as exemplary embodiments in the earlier applications of the applicant. The major difference is the control-signal connection of the processor shown. The processor, which controls all actions of the terminal, can therefore be set by means of the control signal derived from the television (or radio) signal. In this manner, the televote terminals can therefore be driven and set from the studio by the programme makers. If, during a television programme, the home audience is asked to voice a preference for one of the candidates Adamson, Bellamy or Claussen by transmitting televote 78, 79 or 80, one of these values may be keyed in on the keypad of the televote terminal. With the help of the control signal received by the television receiver and passed on to the processor of the televote terminal the telephone number to be dialled is set in the processor. If it involves a sampling assessment of the home audience, the control signal also comprises a command for the processor to determine, with the help of a random generator (as extensively discussed in the former of the earlier application of the applicant), whether or not the televote selected by the user is actually transmitted to the processing system, or with what (random) delay it is transmitted. In this manner, it is prevented that popular programmes cause a traffic explosion which might disrupt the entire PSTN. If a random sample suffices, the processor is then set by the control signal in such a manner that only a small part of all televotes cast at home is actually transmitted. On the other hand, if it is important that all televotes be received, the processor is then set by the control signal in such a manner that all televote terminals do transmit their selected televotes, but within a much larger time distribution. In practice, the transmission of such televotes may be postponed for several hours, so that the connection with the processing system takes place, e.g., in the nocturnal hours. As indicated earlier, the parameters specifically aimed at the transmission may advantageously be part of the control signal broadcasted, mention being made of the starting time, the termination time, the number of (repeated) transmissions or transmission tries, respectively, and the period of time during which transmission is possible ("response time slot size").

Selection therefore takes place by means of the keypad shown. If the choice (e.g., "79") which may be read from a display ("79; O.K.?") is found to be correct, it may be activated (released for transmission to the central processing system) by an XMT key, which activation in its turn may be reported back to the display ("Transmitted"). As indicated earlier, the selection process for the user may be simplified by concomitantly transmitting supplementary information with the control signal. For example, the text "1-Adamson;78|2-Bellamy;79|3-Claussen;80" may be concomitantly transmitted. The television host can now present the candidate Adamson as candidate 1 (instead of "78"), Bellamy as candidate 2 and Claussen as candidate 3. The processor in the televote terminal is now instructed, by means of the control signal, that the text "1 Adamson; O.K.?" must be displayed if the user keys in "1" as his choice. If the choice is O.K., the XMT key is depressed, and the code "78" (!) is transmitted to the central processing system. If the user enters "2", therefore, "Bellamy" is displayed, and after the choice "3", "Claussen"; these choices may be activated by transmitting "79" and "80", respectively, to the central processing system (without the user being obliged to use these selection numbers, or even being aware of them). In this central processing system (and in the studio), the "unique" response codes "78", "79" and "80" may be used.

Apart from the above options, the control signal offers additional options which cannot be exhaustively described here; the above options should be considered as non-limiting illustrations. Another attractive option is to use the control signal to further accompany the user in the use of the televote terminal. For example, the control signal may transmit a complete - smaller or larger - question-and-answer software program to the televote terminal, which program poses, e.g., questions relating to the television programme, to the candidates, or to the user, which may be answered through the keypad (possibly an alphanumeric keyboard). The user may also be assisted in the use of the televote terminal, namely, by means of messages on the display. The televote terminal may therefore be used in a manner determined by the programme makers.

The televote terminal may also be installed in the form of a module (card), e.g. in a PC, whereby more extensive options become possible.

It should be noted that it is expected that in the future the television receiver, the "Set Top Box" and the televote terminal will be largely integrated. In new generations of television receivers, the "Set Top Box" and the televote terminal will be integrated into the television receiver, and the controls and display devices of that receiver will be used. In doing so, it would seem attractive to integrate the keypad of the televote terminal into the remote control of the receiver, while use may be made of (a part of) the television screen as a display.

### D. REFERENCES

EP 600567-A1 in the name of KONINKLIJKE PTT NEDERLAND N.V., published on 8th June, 1994.

EP 619680-A1 in the name of KONINKLIJKE PTT NEDERLAND N.V., published on 12th October, 1994.

## Claims

1. A system for transmitting, by a user of a radio or television receiver, through a response device to a processing system of response codes on response to a radio or television programme received, characterised in that the response device comprises means whereby the response device is at least partially set by an external control signal.

2. System in accordance with claim 1, characterised in that the control signal is derived from the radio or television signal broadcasted.

3. System in accordance with claim 1, characterized in that the control signal comprises the destination address of the response code to be transmitted.

4. System in accordance with claim 1, characterized in that the control signal selects a transmission mode in which the response code must be transmitted to the processing system.

5. System in accordance with claim 4, characterised in that the control signal comprises a starting time code.

6. System in accordance with claim 4, characterized in that the control signal comprises a termination time code.

7. System in accordance with claim 4, characterized in that the control signal comprises a code which limits the number of tries to transmit a response code.

8. System in accordance with claim 4, characterized in that the control signal comprises a synchronisation code which determines the points in time on which, or the frequency with which, it is permitted to undertake tries to transmit response codes.

9. System in accordance with claim 1, characterized in that the control signal comprises a code which indicates whether or not an identification code of the response device must be transmitted concomitantly with the response code.

10. System in accordance with claim 1, characterized in that the control signal comprises a code which indicates whether or not an identification code of the user of the response device must be transmitted concomitantly with the response code.

11. System in accordance with claim 1, characterized in that the control signal comprises the current response codes.

12. System in accordance with claim 4, characterized in that the control signal comprises information supplementary to said current response codes.

13. A response device for transmitting, by a user of a radio or television receiver, to a processing system response codes in response to to a radio or television programme received, characterised by control means which may be set by an external control signal.

14. Response device in accordance with claim 13, characterised in that it is integrated with a remote control of a television receiver, while use is preferably made of the screen of the television receiver as a display.
